(19) **Europäisches Patentamt / European Patent Office / Office européen des brevets**

(11) **EP 1 727 696 B1**

(12) **FASCICULE DE BREVET EUROPEEN**

(45) Date de publication et mention
de la délivrance du brevet:
**15.08.2007 Bulletin 2007/33**

(21) Numéro de dépôt: **05717724.8**

(22) Date de dépôt: **25.02.2005**

(51) Int Cl.:
***B60K 6/02*** *(2006.01)*      ***B60W 10/10*** *(2006.01)*

(86) Numéro de dépôt international:
**PCT/FR2005/050126**

(87) Numéro de publication internationale:
**WO 2005/084986 (15.09.2005 Gazette 2005/37)**

(54) **Procédé et dispositif de controle d'amortissement des modes oscillants d'une transmission infiniment variable à variateur éléctrique**

Verfahren und Vorrichtung zur Dämpfungssteuerung von Schwingungsmoden eines mit einem elektrischen Variator versehenen stufenlosen Getriebes

Method and device for damping control of oscillating modes of a continuously variable transmission provided with an electric variator& x9;

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.03.2004 FR 0450453**

(43) Date de publication de la demande:
**06.12.2006 Bulletin 2006/49**

(73) Titulaire: **Renault SAS**
**92100 Boulogne Billancourt (FR)**

(72) Inventeurs:
• **POGNANT-GROS, Philippe**
**F-92500 RUEIL MALMAISON (FR)**
• **ROYER, Laurent**
**F-75012 PARIS (FR)**

(74) Mandataire: **Rougemont, Bernard**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**EP-A- 1 097 830          FR-A- 2 823 281**
**US-A1- 2001 020 789      US-B1- 6 343 252**

**Description**

La présente invention concerne la commande des transmissions infiniment variable à variateur électrique.

Plus précisément, elle a pour objet un procédé d'amortissement des modes oscillants d'une transmission infiniment variable à variateur électrique, comportant un moteur thermique et au moins deux machines électriques, ainsi qu'un dispositif de contrôle, assurant la régulation du couple aux roues et du régime du moteur thermique.

Cette invention s'applique sur un véhicule équipé d'un moteur thermique et d'une transmission infiniment variable à variateur électrique, qui présente la particularité de ne pas comporter de coupleur, embrayage ou convertisseur, entre le moteur thermique et la transmission.

Elle trouve une application privilégiée, mais non limitative, sur un dispositif de transmission du type comprenant au moins deux voies parallèles de transmission de puissance, une voie contenant une chaîne cinématique à démultiplication fixe, et une autre voie contenant un variateur de vitesse continu, composé de deux machines électriques.

Par la publication FR 2 823 281, on connaît un dispositif du type indiqué ci-dessus, selon lequel les différentes voies sont connectées d'une part à un répartiteur mécanique d'entrée relié à une source d'énergie mécanique tel qu'un moteur thermique, et d'autre part à un répartiteur mécanique de sortie relié aux roues du véhicule. Les répartiteurs mécaniques d'entrée et de sortie, sont de préférence, mais non obligatoirement, des trains épicycloïdaux.

La transmission décrite dans cette publication comporte ainsi deux machines électriques reliées par un élément tampon d'énergie, intégrées dans une chaîne cinématique disposant de quatre arbres d'entrée et de sortie, respectivement connectés au moteur thermique, aux roues, et aux moteurs électriques.

Selon une disposition habituelle dans le domaine, une unité de calcul de transmission établit des consignes de commande pour chaque actionneur (les deux machines électriques, et éventuellement le moteur thermique), permettant de placer la transmission sur un point de fonctionnement déterminé par d'autres modules de calculs appelés « couches supérieures de supervision », dans les quatre situations de bases suivantes :

- le « tirage », ou «torque tracking, » où le conducteur appuie sur l'accélérateur : la cible du calculateur est un couple à la roue et un régime du moteur thermique requis par le superviseur (c'est le cas le plus courant où le moteur thermique fournit un couple moteur),
- le « rétro », ou « fuel cut off », où le conducteur n'appuie pas sur l'accélérateur, et où le moteur thermique est en coupure d'injection, et fournit un couple résistant ; la cible est un régime thermique requis par le superviseur,
- le « rampage en vitesse », ou « speed creeping », où le véhicule se déplace à faible vitesse, le conducteur n'appuyant ni sur l'accélérateur, ni sur le frein ; la cible est un régime thermique requis par le superviseur, et
- le « rampage en couple », ou « torque creeping », où le véhicule se déplace à faible vitesse, le conducteur appuyant sur la pédale de frein.

L'unité de calcul en charge d'établir les consignes de commande de chaque actionneur doit notamment respecter des spécifications de performance, et résister à diverses perturbations, ou « bruits de commande>> du système, tout en assurant la régulation de l'élément tampon d'énergie.

Parmi ces perturbations, on trouve les oscillations provoquées par l'ensemble des raideurs se situant entre le moteur et les roues. L'agrément et la robustesse de la régulation du groupe motopropulseur sont d'autant plus sensibles à ces raideurs, que la performance est accrue.

La non prise en compte de celles-ci restreint la performance du dispositif de régulation, car une performance trop grande dégrade la robustesse; engendre des oscillations, et mène à l'instabilité du dispositif de régulation.

La présente invention a pour but de supprimer l'effet oscillant de ces raideurs, notamment dans les quatre situations indiquées plus haut, sur la base :

- du suivi d'une référence de couple à la roue,
- du suivi d'une référence de régime moteur thermique, et
- d'un amortissement des oscillations engendrées par les raideurs des liaisons mécaniques (volant amortisseur, différentiel, arbres, ...) entre le moteur thermique, la transmission et les roues.

Dans ce but, elle propose que la commande de couple des machines électriques soit la somme d'une commande principale permettant d'atteindre des consignes couple à la roue et de couple du moteur thermique, et d'un complément de commande destiné à amortir les modes oscillants engendrés par les raideurs de la chaîne cinématique entre le moteur thermique et les roues.

Conformément à l'invention, le complément de commande dépend des signaux de consigne, et d'estimations de grandeurs physiques.

Selon une autre caractéristique de l'invention ce complément de commande est calculé par une unité d'amortissement des modes oscillants.

Il est ajouté à une consigne de commande des machines électriques, établie par une unité de découplage mécanique entre le moteur thermique et les machines électriques.

Selon un mode de réalisation préféré de l'invention, le dispositif de contrôle mis en oeuvre comporte une unité de contrôle mécanique assurant la régulation du couple aux roues et régime du moteur thermique, qui regroupe une unité de détermination mécanique, une unité de régulation mécanique, une unité de découplage mécanique, et une unité d'amortissement des modes de torsion.

D'autres caractéristiques et avantages de la présente invention, apparaîtront clairement à la lecture de la description suivante d'un mode de réalisation non limitatif de celle-ci, en se reportant aux dessins annexés, sur lesquels :

- la figure 1 est un schéma type de transmission infiniment variable auquel s'applique l'invention,
- la figure 2 met en évidence sur ce schéma la modélisation des raideurs prise en compte,
- la figure 3 montre la structure du contrôle mécanique mis en oeuvre selon l'invention, et
- la figure 4 est un schéma de l'unité d'amortissement des modes de torsion

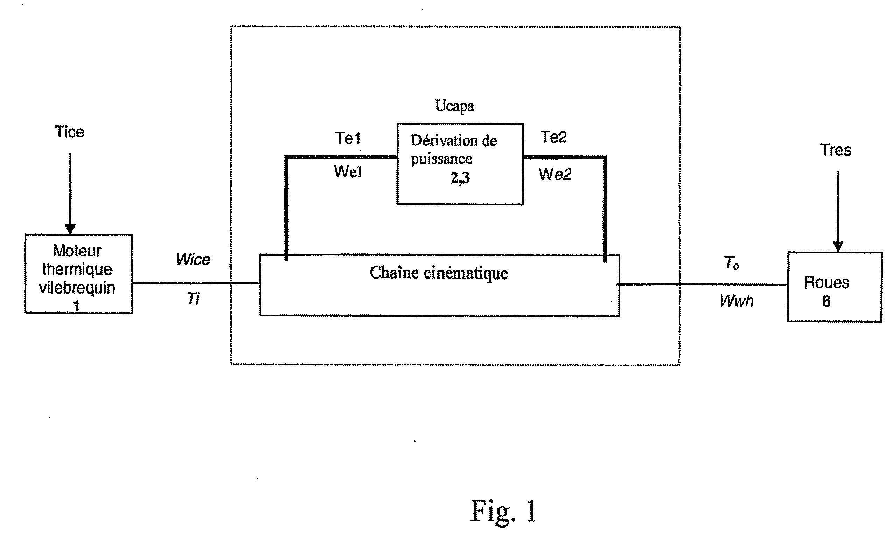

Sur la figure 1, on a représenté schématiquement une transmission infiniment variable à variateur électrique présentant deux voies parallèles de transmission de puissance entre le moteur thermique 1 et les roues 6, telle que décrite dans la publication FR 2 823 281 à laquelle on pourra se reporter. La voie de puissance principale comporte une chaîne cinématique à démultiplication fixe, et la voie dite de dérivation de puissance inclut les deux machines électriques 2, 3 constituant le variateur. Sur le schéma, on a mentionné des grandeurs physiques explicitées ci-dessous : Tice, Ti, Wice, Te1, Te2, We1, We2, To, Wwh, et Tres.

Les grandeurs physiques caractérisant le comportement global du GMP équipé de sa transmission infiniment variable à variateur électrique mentionnées sur les schémas sont les suivantes.

Au niveau du moteur thermique :

- Tice : couple moteur appliqué sur le vilebrequin,
- Wice : régime moteur

Au niveau du volant amortisseur :

- Ti : couple échangé entre le moteur thermique et la boîte,
- Wi : régime en sortie du volant,

Au niveau de la dérivation de puissance :

- Te1: couple de la première machine électrique 2
- We1: régime de la première machine électrique 2
- Te2 : couple de la deuxième machine électrique 3
- We2 : régime de la deuxième machine électrique 3
- Ucapa : tension aux bornes de l'élément de stockage énergétique

Au niveau du différentiel :

- Wo : régime en sortie de la chaîne cinématique
- To : couple à la roue

Au niveau de la roue :

- Wwh : vitesse des roues
- Tres : couple résistant

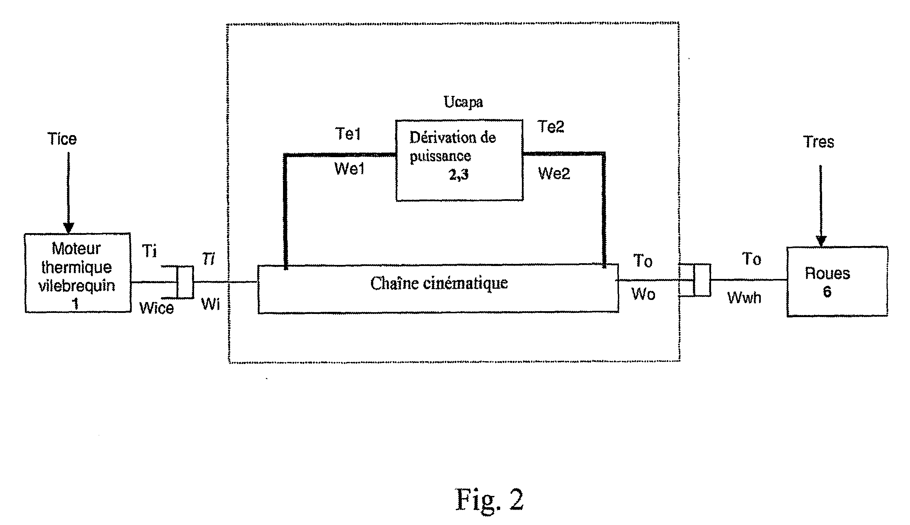

Comme indiqué de façon non limitative sur la figure 2, les raideurs principales du groupe motopropulseur de la figure 1 sont supposées être regroupées en sortie du moteur thermique et sur les roues. En effet, ces deux raideurs apparaissent explicitement dans le modèle du comportement dynamique de ce groupe motopropulseur.

La transmission pouvant se trouver dans l'une des quatre situations citées (tirage, rétro, rampage en vitesse, et rampage en couple), le dispositif de contrôle de la transmission comprend une unité de contrôle mécanique adaptée à ces quatre situations. Plus précisément, elle doit répondre, dans chacune d'elles, aux objectifs mécaniques du contrôle, à savoir la régulation du couple aux roues To, et du régime du moteur thermique Wice.

L'objectif énergétique est par ailleurs assuré par une unité de contrôle énergétique non décrite, dont seuls les signaux sortants interagissant avec le contrôle mécanique sont mentionnés :

- **-** Uw : commande énergétique qui s'exprime en fonction de Te1, Te2, We1 et We2,
- **-** ETe1: estimation du couple de la première machine électrique,
- **-** ETe2 : estimation du couple de la deuxième machine électrique

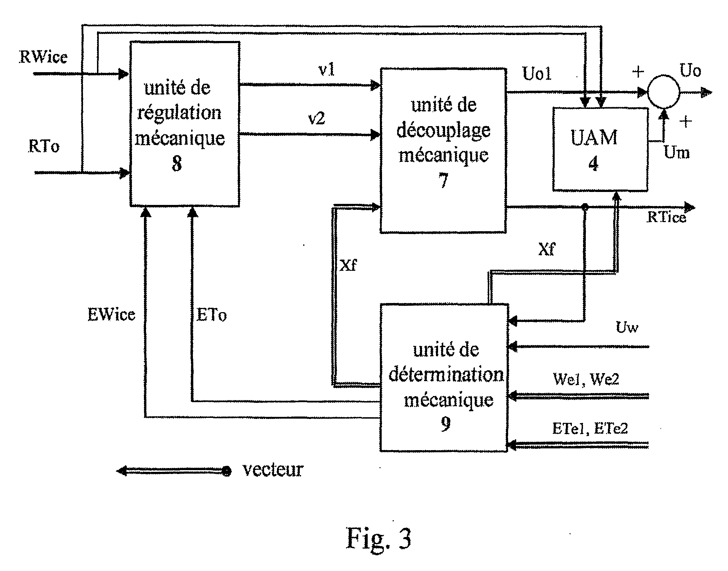

L'unité de contrôle mécanique est elle même composée de quatre unités ou modules regroupés sur la figure 3, avec les différents signaux qui leur sont associés : une unité de détermination mécanique 9, une unité de régulation mécanique 8, une unité de découplage mécanique 7, et une unité d'amortissement des modes de torsion 4.

L'unité de détermination mécanique 9 a pour fonction de fournir l'état du système aux autre unités de contrôle mécanique. A cet effet, elle exploite les mesures de régime We1, We2 des machines électriques 2, 3, ainsi que la commande énergétique Uw, qui s'exprime en fonction des couples respectifs ETe1, ETe2, de ces machines. L'unité 9 exploite aussi un signal RTice, issu de l'unité de découplage mécanique et qui représente la consigne de couple moteur envoyée au calculateur du moteur thermique.

A partir de ces mesures et signaux, l'unité de détermination mécanique calcule les grandeurs suivantes :

- ■ EWice : estimation du régime moteur,
- ■ ETo : estimation du couple à la roue,
- ■ EWe1 et EWe2: estimations des régimes des machines électriques, et
- ■ un vecteur d'estimation Xf, qui comprend les estimations précédentes, ainsi que ETi estimation du couple Ti échangé entre le moteur et la boîte, une estimation de la vitesse aux roues EWwh, une estimation du couple de frottement moteur thermique Etdice, et une estimation du couple de frottement à la roue ETres.

Le vecteur Xf est donc de la forme :

$$Xf = [EWice, EWwh, EWe1, EWe2, ETi, ETo, ETdice, ETres]$$

Ce vecteur contient une estimation de l'état de la transmission dans son ensemble, en interaction avec le moteur thermique et les roues. Cette estimation est à destination des autres unités du contrôle mécanique. Le calcul de l'ensemble de ces estimations est rendu possible grâce aux techniques connues d'observation et d'estimation des systèmes dynamiques, et se base sur un modèle mathématique usuel du comportement dynamique du groupe motopropulseur.

L'unité de régulation mécanique calcule deux signaux de commande intermédiaires v1 et v2, à partir des références de régime moteur RWice, de couple à la roue RTo, des estimations de régime moteur EWice et de couple à la roue (ETo):

- ■ Le signal v1 est calculé par un régulateur à partir de la consigne de régime thermique RWice et de l'estimation du régime thermique EWice
- ■ Le signal v2 est aussi calculé par un régulateur à partir de la consigne de couple aux roues RTo et de l'estimation du couple aux roues ETo.

Les paramètres de ces deux régulateurs sont des paramètres de réglage de l'unité de régulation mécanique, qui déterminent le degré de performance du suivi des consignes RWice et RTo par les grandeurs Wice et To.

L'unité de découplage mécanique 7, calcule une commande Uo1 et une consigne RTice de couple moteur thermique à partir des commandes intermédiaires v1 et v2 et du vecteur d'estimation Xf issu de l'unité de détermination mécanique. Cette commande assure le suivi des consignes RWice et RTo, mais ne peut traiter à elle seule l'amortissement des oscillations engendrées par les raideurs mécaniques.

Enfin, l'unité d'amortissement des modes de torsion 4 (UAM), qui calcule un complément de commande Um qui s'ajoute à Uo1. Um dépend des signaux RWice, RTo et du vecteur Xf. La commande Uo1 est convertie en couples électriques de commande Te1 et Te2.

Comme indiqué plus haut, une des caractéristiques essentielles de la solution proposée concerne l'unité d'amortissement des modes de torsion (UAM). Cette unité fournit un complément de commande Um, amortissant les modes oscillants engendrés par les raideurs. Cette commande vient s'ajouter à la commande Uo1 calculée par l'unité de découplage mécanique, pour obtenir la commande finale Uo.

Conformément à l'invention, le signal Um est le résultat d'une combinaison linéaire des éléments de Xf, à savoir d'estimations de grandeurs physiques, et des signaux de consigne RWice et RTo.

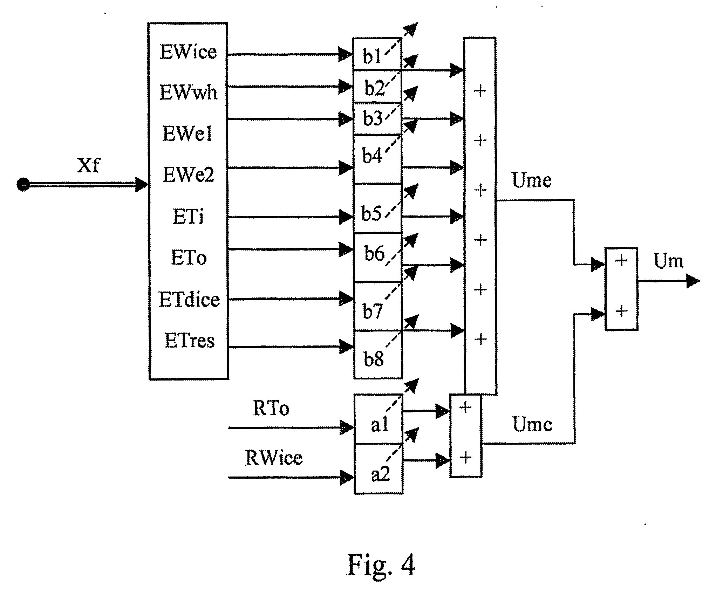

La figure 4 explicite ce calcul, et fait apparaître différents paramètres de pondération ai et bj. Comme indiqué sur cette figure, la commande Um a deux composantes, Umc et Ume, telles que Um = Umc + Ume:

- Umc est une combinaison linéaire des consignes RWice et RTo : Umc = a1 RWice + a2 RTo, et
- Ume est une combinaison linéaire des composantes du vecteur Xf : Ume = b1 EWice + b2 EWwh + b3 EWe1 + b4 EWe2 + b5 ETi + b6 ETo + b7 ETdice + b8 ETres.

Les coefficients ai et bj sont cartographiés en fonction du point de fonctionnement du véhicule. Leur valeur peut être calculée à partir de différents algorithmes bien connus de l'état de l'art en automatique (placement de pôles, optimisation énergétique, commande robuste, ...). Ils constituent aussi des paramètres de mise au point pour la calibration de l'unité d'amortissement des modes oscillants.

L'invention présente de nombreux avantages. Dans chacune des situations de roulage en tirage, rétro, rampage en vitesse et rampage en couple, la solution proposée a l'avantage de traiter les oscillations engendrées par les différentes raideurs mécaniques. La commande délivrée par l'unité d'amortissement des modes de torsion, Um vient s'ajouter à la commande Uo1 pour donner une commande finale Uo qui permet d'agir sur les actionneurs électriques pour amortir les oscillations.

L'absence de traitement des raideurs, conduit en effet à une prestation médiocre dans le véhicule, dès lors que la régulation mécanique doit assurer une performance élevée en terme de suivi de consigne de régime moteur, et de couple à la roue.

Le calcul de Um effectué dans l'unité d'amortissement des modes de torsion, présente enfin l'avantage d'être lié à des estimations de grandeurs physiques, ce qui est intéressant pour la mise au point.

## Revendications

1. Procédé d'amortissement des modes oscillants d'une transmission infiniment variable à variateur électrique, comportant un moteur thermique et au moins deux machines électriques, **caractérisé en ce que** la commande de couple (Uo) des machines électriques est la somme d'une commande principale (Uo1) permettant d'atteindre des consignes couple à la roue (RTo) et de couple du moteur thermique (RWice), et d'un complément de commande (Um) destiné à amortir les modes oscillants engendrés par les raideurs de la chaîne cinématique entre le moteur thermique et les roues.

2. Procédé d'amortissement selon la revendication 1, **caractérisé en ce que** le complément de commande (Um) dépend des signaux de consigne (RTo, RWice) et d'estimations de grandeurs physiques.

3. Procédé d'amortissement selon la revendication 1 ou 2, **caractérisé en ce que** le complément de commande (Um) est composé d'un premier élément (Umc) qui est une combinaison linéaire des signaux de consigne (RWice) et (RTo), et d'un second élément (Ume) qui est une combinaison linéaire de grandeurs physiques.

4. Procédé d'amortissement selon la revendication 3, **caractérisé en ce que** second élément (Ume) intègre une estimation du régime du moteur thermique (EWice)

5. Procédé d'amortissement selon la revendication 3 ou 4, **caractérisé en ce que** le second élément (Ume) intègre une estimation de la vitesse aux roues (Ewwh).

6. Procédé d'amortissement selon la revendication 3, 4 ou 5, **caractérisé en ce que** le second élément (Ume) intègre une estimation de régime des machines électriques (EWe1, EWe2).

7. Procédé d'amortissement selon l'une des revendications 3 à 6, **caractérisé en ce que** le second élément (Ume) intègre une estimation du couple moteur échangé entre le moteur et la boîte (ETi).

8. Procédé d'amortissement selon l'une des revendications 3 à 7, **caractérisé en ce que** le second élément (Ume) intègre une estimation du couple aux roues (ETo).

9. Procédé d'amortissement selon l'une des revendications 3 à 8, **caractérisé en ce que** le second élément (Ume) intègre une estimation du couple de frottement du moteur thermique (ETdice).

10. Procédé d'amortissement selon l'une des revendications 3 à 9, **caractérisé en ce que** le second élément (Ume) intègre une estimation du couple de frottement à la roue (ETres).

11. Dispositif de contrôle d'une transmission assurant la régulation du couple aux roues (To) et du régime thermique (Wice) d'une transmission infiniment variable à variateur électrique comportant un moteur thermique (1) et au moins deux machines électriques (2, 3), **caractérisé en ce qu'**il présente une unité d'amortissement des modes de torsion (4), qui calcule un complément de commande (Um) destiné à amortir les modes oscillants engendrés par les raideurs de la chaîne cinématique entre le moteur thermique (1) et les roues (6).

12. Dispositif de contrôle selon la revendication 11, **caractérisé en ce que** l'unité d'amortissement (4) fournit le complément de commande (Um) ajouté à la consigne de commande (Uo1) des machines électriques (2, 3) établie par une unité de découplage mécanique (7) entre le moteur thermique (1) et les machines électriques (2, 3).

13. Dispositif de contrôle selon la revendication 12, **caractérisé en ce que** l'unité de découplage mécanique (7) reçoit deux commandes (v1, v2) calculées dans une unité de régulation mécanique (8) à partir de consignes et d'estimations du régime du moteur thermique et du couple aux roues (RWice, TWice ; RTo, Eto).

14. Dispositif de contrôle selon la revendication 11, 12 ou 13, **caractérisé en ce qu'**il comporte une unité de détermination mécanique (9) assurant l'estimation du régime moteur (EWice), et du couple à la roue (ETo).

15. Dispositif de contrôle selon l'une des revendications 11 à 14, **caractérisé en ce que** l'unité de détermination mécanique (9) établit un vecteur d'estimation (Xf) des modes oscillants, destiné au calcule du complément de commande (Um).

16. Dispositif de contrôle selon la revendication 15, **caractérisé en ce que** le vecteur d'estimation des modes oscillants (Xf) est transmis à l'unité de découplage mécanique (7) et à l'unité amortissement (4) des modes de torsion.

17. Dispositif de contrôle selon la revendication 14, 15 ou 16, **caractérisé en ce que** l'unité de détermination mécanique (9), l'unité de régulation mécanique (8), l'unité de découplage mécanique (7), et l'unité d'amortissement des modes de torsion (4), sont regroupés dans une unité de contrôle mécanique assurant la régulation du couple aux roues (To) et régime du moteur thermique (Wice).

**Claims**

1. Method of damping the oscillating modes of an infinitely variable transmission with electric variator, comprising a heat engine and at least two electric machines, **characterized in that** the torque instruction (Uo) of the electric machines is the sum of a main instruction (Uo1) making it possible to attain setpoints for wheel torque (RTo) and torque of the heat engine (RWice), and of an instruction supplement (Um) intended to damp the oscillating modes brought about by the stiffnesses of the kinematic chain between the heat engine and the wheels.

2. Method of damping according to Claim 1, **characterized in that** the instruction supplement (Um) depends on the setpoint signals (RTo, RWice) and on estimates of physical quantities.

3. Method of damping according to Claim 1 or 2, **characterized in that** the instruction supplement (Um) is composed of a first element (Umc) which is a linear combination of the setpoint signals (RWice) and (RTo), and of a second element (Ume) which is a linear combination of physical quantities.

4. Method of damping according to Claim 3, **characterized in that** second element (Ume) integrates an estimate of the status of the heat engine (EWice).

5. Method of damping according to Claim 3 or 4, **characterized in that** the second element (Ume) integrates an estimate of the speed of the wheels (Ewwh).

6. Method of damping according to Claim 3, 4 or 5, **characterized in that** the second element (Ume) integrates an estimate of status of the electric machines (EWe1, EWe2).

7. Method of damping according to one of Claims 3 to 6, **characterized in that** the second element (Ume) integrates an estimate of the engine torque exchanged between the engine and the box (ETi).

8. Method of damping according to one of Claims 3 to 7, **characterized in that** the second element (Ume) integrates an estimate of the torque at the wheels (ETo).

9. Method of damping according to one of Claims 3 to 8, **characterized in that** the second element (Ume) integrates an estimate of the frictional torque of the heat engine (ETdice).

10. Method of damping according to one of Claims 3 to 9, **characterized in that** the second element (Ume) integrates an estimate of the frictional torque at the wheel (ETres).

11. Device for supervising a transmission ensuring the regulation of the torque at the wheels (To) and of the thermal status (Wice) of an infinitely variable transmission with electric variator comprising a heat engine (1) and at least two electric machines (2, 3), **characterized in that** it exhibits a unit for damping the torsional modes (4), which calculates an instruction supplement (Um) intended to damp the oscillating modes brought about by the stiffnesses of the kinematic chain between the heat engine (1) and the wheels (6).

12. Supervising device according to Claim 11, **characterized in that** the damping unit (4) provides the instruction supplement (Um) added to the instruction setpoint (Uo1) of the electric machines (2, 3) established by a unit for mechanical decoupling (7) between the heat engine (1) and the electric machines (2, 3).

13. Supervising device according to Claim 12, **characterized in that** the mechanical decoupling unit (7) receives two instructions (v1, v2) calculated in a unit for mechanical regulation (8) on the basis of setpoints and of estimates of the status of the heat engine and of the torque at the wheels (RWice, TWice, RTo, ETo).

14. Supervising device according to Claim 11, 12 or 13, **characterized in that** it comprises a mechanical determination unit (9) affording estimation of the engine status (EWice), and of the torque at the wheel (ETo).

15. Supervising device according to one of Claims 11 to 14, **characterized in that** the mechanical determination unit (9) establishes an estimation vector (Xf) for the oscillating modes, which is intended for the calculation of the instruction supplement (Um).

16. Supervising device according to Claim 15, **characterized in that** the estimation vector for the oscillating modes (Xf) is transmitted to the mechanical decoupling unit (7) and to the damping unit (4) for the torsional modes.

17. Supervising device according to Claim 14, 15 or 16, **characterized in that** the mechanical determination unit (9), the mechanical regulating unit (8), the mechanical decoupling unit (7), and the damping unit for the torsional modes (4), are grouped together in a mechanical supervising unit affording regulation of the torque at the wheels (To) and status of the heat engine (Wice).

**Patentansprüche**

1. Verfahren zur Dämpfung der Schwingungsmoden eines mit einem elektrischen Variator versehenen stufenlosen Getriebes, umfassend einen Thermomotor und mindestens zwei Elektromaschinen, **dadurch gekennzeichnet, dass** der Drehmomentbefehl (Uo) der Elektromaschinen die Gesamtheit eines Hauptbefehls (Uo1), der das Zuführen von Drehmomentbefehlen an das Rad (Rto) und des Drehmoments des Thermomotors (RWice) gestattet, und eines Ergänzungsbefehls (Um) ist, der dazu bestimmt ist, die durch die Strahlen der Kinematikkette zwischen dem Thermomotor und den Rädern auftretenden Schwingungen zu dämpfen.

2. Dämpfungsverfahren nach Anspruch 1, **dadurch gekennzeichnet, dass** der Ergänzungsbefehl (Um) von Anweisungssignalen (RTo, RWice) und von Schätzungen physikalischer Größen abhängt.

3. Dämpfungsverfahren nach Anspruch 1 oder 2, **dadurch gekennzeichnet, dass** der Ergänzungsbefehl (Um) aus einem ersten Element (Umc), bei dem es sich um eine lineare Kombination der Anweisungssignale (RWice) und (RTO) handelt, und aus einem zweiten Element (Ume), bei dem es sich um eine lineare Kombination physikalischer Größen handelt, besteht.

4. Dämpfungsverfahren nach Anspruch 3, **dadurch gekennzeichnet, dass** das zweite Element (Ume) eine Schätzung des Betriebs des Thermomotors (EWice) integriert.

**5.** Dämpfungsverfahren nach Anspruch 3 oder 4, **dadurch gekennzeichnet, dass** das zweite Element (Ume) eine Schätzung der Radgeschwindigkeit (Ewwh) integriert.

**6.** Dämpfungsverfahren nach Anspruch 3, 4 oder 5, **dadurch gekennzeichnet, dass** das zweite Element (Ume) eine Schätzung des Betriebs der elektrischen Maschinen (EWe1, EWe2) integriert.

**7.** Dämpfungsverfahren nach einem der Ansprüche 3 bis 6, **dadurch gekennzeichnet, dass** das zweite Element (Ume) eine Schätzung des zwischen dem Motor und dem Gehäuse (ETi) gewechselten Drehmoments des Motors integriert.

**8.** Dämpfungsverfahren nach einem der Ansprüche 3 bis 7, **dadurch gekennzeichnet, dass** das zweite Element (Ume) eine Schätzung des Drehmoments der Räder (ETo) integriert.

**9.** Dämpfungsverfahren nach einem der Ansprüche 3 bis 8, **dadurch gekennzeichnet, dass** das zweite Element (Ume) eine Schätzung des Reibungsdrehmoments des Thermomotors (Etdice) integriert.

**10.** Dämpfungsverfahren nach einem der Ansprüche 3 bis 9, **dadurch gekennzeichnet, dass** das zweite Element (Ume) eine Schätzung des Reibungsdrehmoments des Rads (ETres) integriert.

**11.** Vorrichtung zum Steuern eines Getriebes, welche die Regulation des Drehmoments der Räder (To) und des thermischen Betriebs (Wice) eines stufenlosen Getriebes mit einem elektrischen Variator sicherstellt, das einen Thermomotor (1) und mindestens zwei Elektromaschinen (2, 3) umfasst, **dadurch gekennzeichnet, dass** sie eine Einheit zum Dämpfen der Torsionsmoden (4) aufweist, welche einen Ergänzungsbefehl berechnet (Um), der dazu bestimmt ist, die Schwingungsmoden zu dämpfen, welche durch die Strahlen der Kinematikkette zwischen dem Thermomotor (1) und den Rädern (6) entstehen.

**12.** Steuervorrichtung nach Anspruch 11, **dadurch gekennzeichnet, dass** die Dämpfungseinheit (4) den Ergänzungsbefehl (Um) den Elektromaschinen (2, 3) zuführt, welcher der Befehlsanweisung (Uo1), die von einer Einheit zur mechanischen Entkupplung (7) zwischen dem Thermomotor (1) und den Elektromaschinen (2,3) erstellt wird, zugefügt ist.

**13.** Steuervorrichtung nach Anspruch 12, **dadurch gekennzeichnet, dass** die Einheit zur mechanischen Entkupplung (7) zwei in einer Einheit zur mechanischen Regulierung (8) aus den Anweisungen und den Schätzungen des Betriebs des Thermomotors und des Drehmoments der Räder (RWice, TWice; RTo, ETo) berechnete Befehle (v1, v2) empfängt.

**14.** Steuervorrichtung nach Anspruch 11, 12 oder 13, **dadurch gekennzeichnet, dass** sie eine Einheit zur mechanischen Bestimmung (9) umfasst, die die Schätzung des Betriebs des Motors (EWice) und des Drehmoments des Rads (ETo) sicherstellt.

**15.** Steuervorrichtung nach einem der Ansprüche 11 bis 14, **dadurch gekennzeichnet, dass** die Einheit zur mechanischen Bestimmung (9) einen Schätzvektor (Xf) der Schwingmoden erstellt, der dazu bestimmt ist, den Ergänzungsbefehl (Um) zu berechnen.

**16.** Steuervorrichtung nach Anspruch 15, **dadurch gekennzeichnet, dass** der Schätzvektor der Schwingmoden (Xf) an die Einheit zur mechanischen Entkupplung (7) und die Einheit zum Dämpfen (4) der Torsionsmoden übertragen wird.

**17.** Steuervorrichtung nach Anspruch 14, 15 oder 16, **dadurch gekennzeichnet, dass** die Einheit zur mechanischen Bestimmung (9), die Einheit zur mechanischen Regulierung (8), die Einheit zur mechanischen Entkupplung (7) und die Einheit zur Dämpfung der Torsionsmoden (4) in einer mechanischen Steuereinheit zusammengefasst sind, die die Regulierung des Drehmoments der Räder (To) und des Betriebs des Thermomotors (Wice) sicherstellt.

Fig. 1

Fig. 2

EP 1 727 696 B1

RWice

RTo

unité de
régulation
mécanique
8

v1

v2

unité de
découplage
mécanique
7

Uo1

UAM
4

+ Uo

+
Um

RTice

Xf

Xf

EWice

ETo

unité de
détermination
mécanique
9

Uw

We1, We2

ETe1, ETe2

vecteur

Fig. 3

Fig. 4

EP 1 727 696 B1

**RÉFÉRENCES CITÉES DANS LA DESCRIPTION**

**Documents brevets cités dans la description**

- FR 2823281